# EUROPEAN PATENT APPLICATION

(11) **EP 4 257 552 A1**
(43) Date of publication of application: **11.10.2023**
(21) Application number: 22911002.8
(22) Date of filing: 13.12.2022
(51) Int. Cl.: C01D 15/02, C22B 3/42, C22B 3/44, C22B 26/12

(54) **METHOD FOR PRODUCING LITHIUM HYDROXIDE**

(30) Priority: 22.12.2021 JP 2021207750
(71) Applicant: SUMITOMO METAL MINING CO., LTD., Tokyo 105-8716 (JP)
(72) Inventor: SENBA Yusuke, Niihama-shi, Ehime 792-0002 (JP); TAKANO Masatoshi, Niihama-shi, Ehime 792-0002 (JP); ASANO Satoshi, Niihama-shi, Ehime 792-0002 (JP); HEGURI Shin-ichi, Niihama-shi, Ehime 792-0002 (JP)
(74) Representative: Jones, Nicholas Andrew
(86) International application number: PCT/JP2022/045799
(87) International publication number: WO 2023/120294

(57) **Abstract**

To provide a method for producing lithium hydroxide allowing obtaining high purity lithium hydroxide by reducing impurities to a preliminarily determined level in a step before a conversion step by electrodialysis. The method for producing lithium hydroxide includes steps (1) to (5) below: (1) a hydrocarbonating step of blowing carbon dioxide to a slurry of a mixture of water and rough lithium carbonate; (2) a decarbonation step of heating a lithium hydrogen carbonate solution; (3) an acid solution dissolution step of dissolving a purified lithium carbonate in an acid solution; (4) an impurity removal step of removing a part of metal ions from a first lithium containing solution; and (5) a conversion step of converting lithium salt contained in a second lithium containing solution into lithium hydroxide by electrodialysis. This producing method allows reliably removing metals other than lithium, thereby allowing an increased purity of obtained lithium hydroxide.

## Description

### BACKGROUND

### 1. Technical Field

The present invention relates to a method for producing lithium hydroxide. More specifically, the present invention relates to a method for producing lithium hydroxide including a conversion step by electrodialysis.

### 2. Related Art

Recently, as a positive electrode material for an on-vehicle battery, demand for a nickel-based positive electrode material, that is, NCA is expanding. Then, when the nickel-based positive electrode material is used for the on-vehicle battery, it is economically preferred that lithium as a constituent element of the nickel-based positive electrode material is supplied as lithium hydroxide. This lithium hydroxide is obtained by, for example, adding slaked lime to lithium carbonate to substitute a hydroxyl group. Masao Kobayashi, Lithium, its History, Source, Production, and Application, Journal of the Mining Institute of Japan, Japan, 1984, volume 100 issue 1152, 115-122 discloses a method for obtaining lithium hydroxide from lithium carbonate. A reason why the lithium carbonate is used as a starting material is that it is less likely to degenerate compared with other lithium compounds, and can be stored for a long time. However, this producing method for obtaining the lithium hydroxide from the lithium carbonate has a problem of an increased production cost due to a high cost of agents. In addition, there is also a problem of a high calcium concentration in the lithium hydroxide.

Patent Document 1 discloses a method that uses electrodialysis (membrane separation) and ion-exchange resin as a method for producing lithium hydroxide from lithium carbonate. This method discloses that polyvalent metals with a valence of two or more, such as calcium described above, can be reduced.

Patent Document 1: JP-A-2009-270189

Non-Patent Document 1: Masao Kobayashi, Lithium, its History, Source, Production, and Application, Journal of the Mining Institute of Japan, Japan, 1984, volume 100 issue 1152, 115-122

With the producing method in JP-A-2009-270189, an effect of removing sodium and potassium, which are alkali metals the same as lithium, is limited because the sodium and the potassium present a behavior similar to that of the lithium. In view of this, when a sodium concentration in lithium carbonate as a raw material is high, a purity of obtained lithium hydroxide lowers, thus failing to be used as a raw material for a battery in some cases. In particular, when the lithium carbonate is produced using a salt lake brine as a raw material, sodium hydroxide is used for a neutralizer for removing impurities, which tends to increase sodium in the lithium carbonate, and in this case, it is difficult to produce the high purity lithium hydroxide.

Additionally, when concentrations of the polyvalent metals with a valence of two or more, such as calcium, in an electrolyte are increased in the electrodialysis, a used barrier membrane is easily damaged. There is a problem that the respective concentrations of the polyvalent metals, such as calcium, in the electrolyte need to be less than 0.05 mg/L before the electrodialysis is performed in order to reduce this damage.

In consideration of the above-described circumstances, it is an object of the present invention to provide a method for producing lithium hydroxide allowing obtaining high purity lithium hydroxide by reducing impurities to a preliminarily determined level in a step before a conversion step by electrodialysis.

### SUMMARY

A method for producing lithium hydroxide according to a first invention includes steps (1) to (5) below: (1) a hydrocarbonating step of blowing carbon dioxide to a slurry of a mixture of water and rough lithium carbonate to obtain a lithium hydrogen carbonate solution; (2) a decarbonation step of heating the lithium hydrogen carbonate solution to obtain a purified lithium carbonate; (3) an acid solution dissolution step of dissolving the purified lithium carbonate in an acid solution to obtain a first lithium containing solution; (4) an impurity removal step of removing a part of metal ions from the first lithium containing solution to obtain a second lithium containing solution; and (5) a conversion step of converting lithium salt contained in the second lithium containing solution into lithium hydroxide by electrodialysis to obtain a lithium hydroxide containing solution in which the lithium hydroxide is dissolved.

The method for producing lithium hydroxide according to a second invention, which is in the first invention, includes a crystallization step of solidifying the lithium hydroxide dissolved in the lithium hydroxide containing solution after the conversion step.

In the method for producing lithium hydroxide according to a third invention, which is in the first invention or the second invention, the impurity removal step includes: a pH adjustment step of adjusting a pH by adding alkali to the first lithium containing solution to obtain a post-pH adjustment liquid; and an ion exchange step of bringing the post-pH adjustment liquid into contact with ion-exchange resin to obtain the second lithium containing solution.

In the method for producing lithium hydroxide according to a fourth invention, which is in the first invention or the second invention, the impurity removal step includes: a step of adding an oxidant to the first lithium containing solution to obtain a post-oxidation liquid; a pH adjustment step of adjusting a pH by adding alkali into the post-oxidation liquid to obtain a post-pH adjustment liquid; and an ion exchange step of bringing the post-pH adjustment liquid into contact with ion-exchange resin to obtain the second lithium containing solution.

In the method for producing lithium hydroxide according to a fifth invention, which is in the third invention or the fourth invention, the pH of the post-pH adjustment liquid after the pH adjustment step is 6 or more and 10 or less.

In the method for producing lithium hydroxide according to a sixth invention, which is in any one of the third invention to the fifth invention, the alkali includes lithium carbonate or lithium hydroxide.

In the method for producing lithium hydroxide according to a seventh invention, which is in the sixth invention, the lithium carbonate is the purified lithium carbonate obtained in the decarbonation step.

In the method for producing lithium hydroxide according to an eighth invention, which is in any one of the first invention to the seven invention, in the decarbonation step, the lithium hydrogen carbonate solution is heated at 60°C or more and 90°C or less.

According to the first invention, executing the hydrocarbonating step, the decarbonation step, and the acid solution dissolution step in the step before the conversion step by electrodialysis allows reliably removing the metals other than lithium, and therefore, a purity of the obtained lithium hydroxide can be increased. Additionally, the concentrations of polyvalent metals with a valence of two or more, such as calcium, in the electrolyte can be lowered, and therefore, a damage of a barrier membrane used in the conversion step after these steps can be reduced.

According to the second invention, the crystallization step of solidifying the lithium hydroxide is provided after the conversion step, and therefore, the lithium hydroxide can be solidified to have a high purity using a difference in solubility.

According to the third invention, the impurity removal step includes the ion exchange step of using the ion-exchange resin and the pH adjustment step of adding the alkali before the ion exchange step, and therefore, the pH can be adjusted to be appropriate for the subsequent ion exchange step in the pH adjustment step and a removal rate of divalent or more metals is substantially improved in the ion exchange step.

According to the fourth invention, the impurity removal step includes the ion exchange step of using the ion-exchange resin, and the oxidation step of adding the oxidant and the pH adjustment step of adding the alkali before the ion exchange step, and therefore, manganese can be removed when the manganese is contained in the first lithium containing solution, and the pH can be adjusted to be appropriate for the subsequent ion exchange step in the pH adjustment step, thereby substantially improving a removal rate of divalent or more metals in the ion exchange step.

According to the fifth invention, the pH of the post-pH adjustment liquid after the pH adjustment step is 6 or more and 10 or less, and therefore, the impurities are removed with more certainty in the ion exchange step after the pH adjustment step.

According to the sixth invention, the alkali contains the lithium carbonate or lithium hydroxide, and therefore, the added alkali can be avoided from being added with impurities, such as sodium or potassium.

According to the seventh invention, the lithium carbonate is the purified lithium carbonate obtained in the decarbonation step, and therefore, the use of the product obtained in the previous step allows saving an extra cost.

According to the eighth invention, the heating is 60°C or more and 90°C or less, and therefore, a process period in the decarbonation step can be shortened.

### BRIEF DESCRIPTION OF DRAWINGS

Fig. 1 is a flowchart of a method for producing lithium hydroxide according to a first embodiment of the present invention;
Fig. 2 is a detailed flowchart of an impurity removal step of the method for producing lithium hydroxide in Fig. 1;
Fig. 3 is a detailed flowchart of an impurity removal step constituting a method for producing lithium hydroxide according to a second embodiment of the present invention; and
Fig. 4 is a graph illustrating a relation between an energizing time in a conversion step and a lithium concentration in a lithium hydroxide containing solution.

### DETAILED DESCRIPTION

Next, embodiments of the present invention will be described based on the drawings. However, the embodiments described below are to exemplarily describe methods for producing lithium hydroxide for embodying a technical idea of the present invention, and the present invention does not specify the method for producing lithium hydroxide to the following.

The method for producing lithium hydroxide according to the present invention includes the steps (1) to (5) below; (1) a hydrocarbonating step: a step of blowing carbon dioxide to a slurry of a mixture of water and rough lithium carbonate to obtain a lithium hydrogen carbonate solution; (2) a decarbonation step: a step of heating the lithium hydrogen carbonate solution to obtain purified lithium carbonate; (3) an acid solution dissolution step: a step of dissolving the purified lithium carbonate in an acid solution to obtain a first lithium containing solution; (4) an impurity removal step: a step of removing a part of metal ions from the first lithium containing solution to obtain a second lithium containing solution; (5) a conversion step: a step of converting lithium salt contained in the second lithium containing solution into lithium hydroxide by electrodialysis to obtain a lithium hydroxide containing solution in which the lithium hydroxide is dissolved.

The present invention allows reliably removing metals other than lithium by executing the hydrocarbonating step, the decarbonation step, and the acid solution dissolution step in a step before the conversion step by electrodialysis, thereby allowing an increased purity of obtained lithium hydroxide. Additionally, concentrations of polyvalent metals with a valence of two or more, such as calcium, in an electrolyte can be lowered, thereby allowing a reduced damage of a barrier membrane used in the conversion step after these steps.

In the method for producing lithium hydroxide, it is preferred to provide a crystallization step of solidifying the lithium hydroxide dissolved in the lithium hydroxide containing solution after the conversion step. This aspect allows solidifying the lithium hydroxide to have a high purity using a difference in solubility.

In the method for producing lithium hydroxide, it is preferred that the impurity removal step includes a pH adjustment step of adjusting a pH by adding alkali into the first lithium containing solution to obtain a post-pH adjustment liquid and an ion exchange step of bringing the post-pH adjustment liquid into contact with ion-exchange resin to obtain the second lithium containing solution. This aspect allows the pH to be adjusted to be appropriate for the subsequent ion exchange step, and a removal rate of divalent or more metals is substantially improved in the ion exchange step.

In the method for producing lithium hydroxide, it is preferred that the impurity removal step includes a step of adding an oxidant to the first lithium containing solution to obtain a post-oxidation liquid, a pH adjustment step of adjusting a pH by adding alkali into the post-oxidation liquid to obtain a post-pH adjustment liquid, and an ion exchange step of bringing the post-pH adjustment liquid into contact with ion-exchange resin to obtain the second lithium containing solution. This aspect allows removing manganese when the manganese is contained in the first lithium containing solution, and allows pH to be adjusted to be appropriate for the subsequent ion exchange step in the pH adjustment step, and a removal rate of divalent or more metals is substantially improved in the ion exchange step.

In the method for producing lithium hydroxide, a pH of the post-pH adjustment liquid after the pH adjustment step is preferred to be 6 or more and 10 or less. This aspect allows removing impurities with more certainty in the ion exchange step after the pH adjustment step.

In the method for producing lithium hydroxide, the alkali used in the pH adjustment step is preferred to be the purified lithium carbonate obtained in the decarbonation step. This aspect allows avoiding impurities, such as sodium or potassium, from being added. Additionally, since the product obtained from the previous step is used, an extra cost can be saved.

In the method for producing lithium hydroxide, in the decarbonation step, it is preferred that the lithium hydrogen carbonate solution is heated at 60°C or more and 90°C or less. This aspect allows shortening a process period in the decarbonation step.

### (First Embodiment)

### <Hydrocarbonating Step>

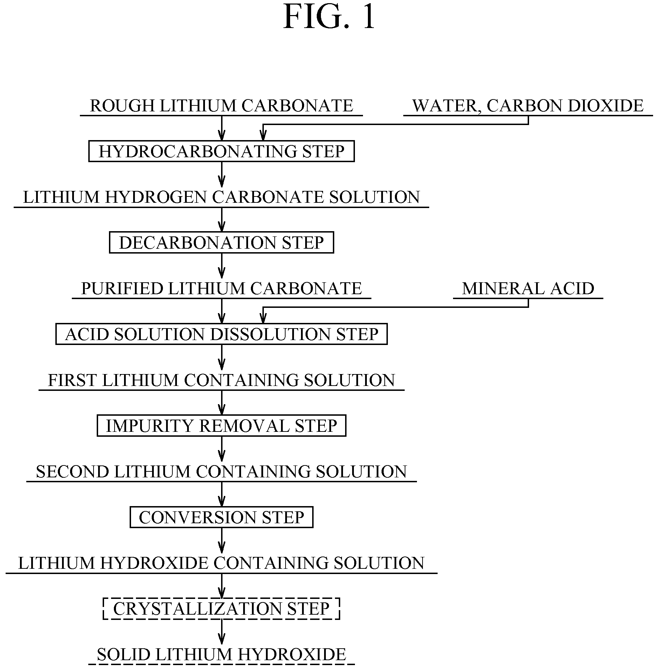

Fig. 1 illustrates a flowchart of a method for producing lithium hydroxide according to a first embodiment of the present invention. This embodiment executes (1) a hydrocarbonating step, (2) a decarbonation step, (3) an acid solution dissolution step, (4) an impurity removal step, and (5) conversion step in this order. In this embodiment, the hydrocarbonating step is performed first. The hydrocarbonating step is a step of blowing carbon dioxide to a slurry of a mixture of water and rough lithium carbonate to obtain a lithium hydrogen carbonate solution. Here, the "rough lithium carbonate" means one that contains lithium carbonate as a main component and has a high proportion of impurities compared with a "purified lithium carbonate" described later. Specifically, lithium carbonate high in impurity obtained by the method disclosed in Masao Kobayashi, Lithium, its History, Source, Production, and Application, Journal of the Mining Institute of Japan, Japan, 1984, volume 100 issue 1152, 115-122 from a brine, such as a salt lake brine, a geothermal brine, and a petroleum brine, or a leaching solution of lithium ore or the like corresponds to the "rough lithium carbonate."

As shown in Formula 1, the rough lithium carbonate reacts with carbon dioxide and water to be converted into lithium hydrogen carbonate high in solubility, and thus, a lithium hydrogen carbonate solution is obtained. That is, the lithium hydrogen carbonate melts into a liquid to turn into the lithium hydrogen carbonate solution, and other sparingly soluble impurities solidifies. For example, this impurity is calcium carbonate. Thus separating solid and liquid allows removing the calcium carbonate and the like as the impurities.

[Formula 1] Li₂CO₃ + CO₂ + H₂O → 2LiHCO₃

In the hydrocarbonating step according to the embodiment, the temperature is preferred to be 20°C or more and 40°C or less. The blown carbon dioxide preferably has an amount immediately before the unreacted and insoluble carbon dioxide starts to come out in a form of air bubbles.

### <Decarbonation Step>

As shown in Fig. 1 and Formula 2, in the decarbonation step, by heating the lithium hydrogen carbonate solution, the lithium hydrogen carbonate is converted into the purified lithium carbonate having a low solubility, and the purified lithium carbonate is precipitated again to obtain the purified lithium carbonate. The rough lithium carbonate contains a high concentration of sodium in some cases. Thus, to reduce this sodium concentration, the lithium carbonate in the rough lithium carbonate is dissolved as the lithium hydrogen carbonate having a high solubility in the hydrocarbonating step. Afterwards, the lithium hydrogen carbonate is turned into lithium carbonate again in a form of the purified lithium carbonate in the decarbonation step to precipitate the purified lithium carbonate. Here, the "purified lithium carbonate" means one that contains lithium carbonate as a main component and has a low proportion of impurities compared with the "rough lithium carbonate" described above. The sodium is almost removed from the precipitated purified lithium carbonate, and thus, the purity of the purified lithium carbonate can be increased. The purified lithium carbonate as the precipitate and the supernatant are separated into solid and liquid, thus allowing obtaining the purified lithium carbonate as a solid material.

[Formula 2] 2LiHCO₃ → Li₂CO₃ + CO₂ + H₂O

The decarbonation step according to the embodiment was performed at 80°C, but it is not limited to this. For example, it is preferred to be performed at 60°C or more and 90°C or less. This aspect allows shortening a process period in the decarbonation step. The heating method is not particularly limited, and it is preferred to employ a method that corresponds to a scale of a reaction container. For example, a Teflon (Registered Trademark) heater or steam heating can be employed. In the solid-liquid separation in the decarbonation step according to the embodiment, it is preferred that a filter press is used.

### <Acid Solution Dissolution Step>

As shown in Fig. 1, in the acid solution dissolution step, the purified lithium carbonate obtained in the decarbonation step is dissolved with an acid solution to obtain a lithium salt solution. The use of the lithium carbonate for the subsequent conversion step causes two problems: the low solubility of the lithium carbonate allows only conversion with thin liquid, and efficiency is poor (the size of facility becomes large with respect to throughput); and carbonic acid gas is possibility generated during conversion, possibly damaging the membrane. To solve these problems, the purified lithium carbonate is dissolved with an acid solution to turn into a first lithium salt solution as the lithium salt solution. Since the pH decreases after the acid solution dissolution, adjusting the pH to the pH appropriate for impurity removal is preferred in the ion exchange step. Note that the acid used in the acid solution dissolution step is hydrochloric acid, sulfuric acid, nitric acid, and the like. Hydrochloric acid is used in this embodiment, and a lithium chloride solution is obtained as a lithium salt solution in the acid solution dissolution step. The chemical reaction formula is illustrated in Formula 3.

[Formula 3] Li₂CO₃ + 2HCl → 2LiCl + H₂O + CO₂

Note that since the pH needs to be increased in the ion exchange step described later, the amount of acid solution used in the acid solution dissolution step is preferably the minimum necessary amount. For example, the pH is preferably adjusted to be 8.5.

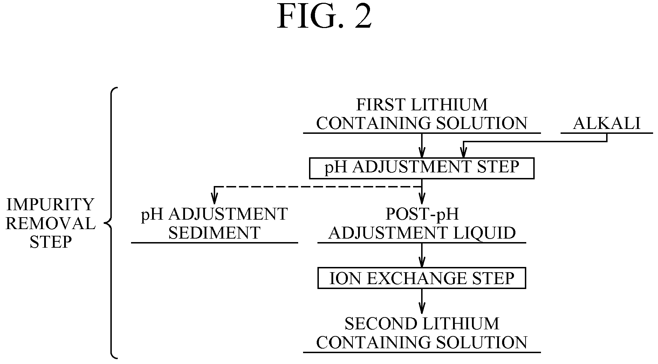

As shown in Fig. 1, in the impurity removal step, a part of metal ions is removed from the first lithium containing solution to obtain a second lithium containing solution. Fig. 2 illustrates a flowchart illustrating a configuration of the impurity removal step according to the embodiment. In this embodiment, the impurity removal step includes the pH adjustment step and the ion exchange step. Note that the impurity removal step is not limited to the configuration illustrated here.

### <pH Adjustment Step in Impurity Removal Step>

As shown in Fig. 2, in the pH adjustment step, alkali is added to the first lithium containing solution and a pH is adjusted to obtain a pH adjusted liquid. At this time, depending on the adjustment pH or the impurity concentration, a pH adjustment sediment containing some impurities is obtained. In the pH adjustment step, the post-pH adjustment liquid is adjusted to a pH appropriate for removing impurities, such as Ca and Mg, in the ion exchange step subsequent to this. Specifically, the pH is preferred to be 6 or more and 10 or less. When the pH is smaller than 6, the impurity removal in the ion exchange step may be insufficient. When the pH is larger than 10, an amount of added alkali is too much. The post-pH adjustment liquid is even more preferred to be pH 7.5 or more and pH 8.5 or less. This is because an additive amount of the neutralizer can be reduced and a necessary impurity removal performance can be expected. The alkali is preferred to be one that does not contain sodium or potassium. For example, the alkali is preferred to contain lithium carbonate or lithium hydroxide. In this case, the lithium carbonate needs to be lithium carbonate with a 99% or more purity, and the lithium hydroxide needs to be lithium hydroxide with a 99% or more purity. Alternatively, this lithium carbonate is more preferred to be the purified lithium carbonate obtained after undergoing the above-described decarbonation step. This aspect allows avoiding the impurities, such as sodium or potassium, from being added. Additionally, the use of the product obtained in the previous step allows saving an extra cost.

<Ion Exchange Step in Impurity Removal Step>

As shown in Fig. 2, in the ion exchange step, by bringing the post-pH adjustment liquid into contact with the ion-exchange resin, a second lithium containing solution from which a part of impurities has been removed is obtained. While in the ion exchange step, divalent or more metal ions are removed, calcium, aluminum, manganese, and magnesium by an amount of the solubility that remains corresponding to the pH in the pH adjustment step are also removed at this time.

Chelating resin is preferably used as the ion-exchange resin. For example, iminodiacetic acid resin can be used. Specifically, Amberlite IRC748 can be used. A preferred value is determined as the pH of the post-pH adjustment liquid in the ion exchange step depending on the ion-exchange resin. Note that the ion exchange step is preferably performed directly on the first lithium containing solution obtained in the acid solution dissolution step. The method for contacting the ion-exchange resin and the post-pH adjustment liquid is preferably a column method. However, there may be a case where a batch mixing method is employed.

### <Conversion Step>

As shown in Fig. 1, in the conversion step, lithium salt contained in the second lithium containing solution is converted into lithium hydroxide to obtain a lithium hydroxide containing solution in which lithium hydroxide is dissolved. In this embodiment, the lithium salt is lithium chloride. In the second lithium containing solution, the lithium salt is dissolved with the acid used in the acid solution dissolution step in the impurity removal step. In this step, for example, an electrodialysis using a bipolar membrane is performed to convert these aqueous solutions into the lithium hydroxide containing solution containing lithium hydroxide and hydrochloric acid. That is, by performing the electrodialysis, lithium chloride in the second lithium containing solution is decomposed, lithium ions of lithium chloride pass through a cation membrane and bind to hydroxide ions to become lithium hydroxide, and chloride ions pass through an anion membrane to become hydrochloric acid. The recovered hydrochloric acid can be recycled to the elution step. Accordingly, the usage of mineral acid can be reduced.

Note that, for example, an electrodialysis using an ion-exchange membrane corresponds to the conversion step in addition to the electrodialysis using the bipolar membrane. When a cation-exchange membrane is used as the ion-exchange membrane, lithium hydroxide is generated in a cathode chamber.

### (Second Embodiment)

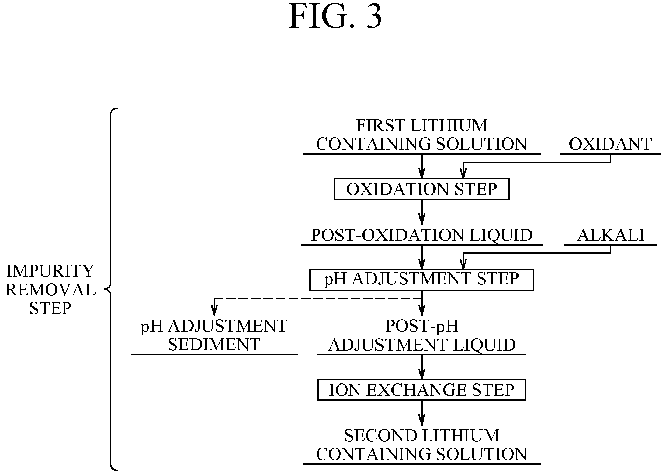

Fig. 3 depicts a flowchart of the impurity removal step of the method for producing lithium hydroxide according to the second embodiment of the present invention. This embodiment differs from the first embodiment in that the oxidation step is included before the pH adjustment step in the impurity removal step and is otherwise same as the first embodiment. The following describes the neutralization step according to the second embodiment.

### <Oxidation Step in Impurity Removal Step>

As shown in Fig. 3, the oxidation step is a step of adding an oxidant, such as air, oxygen, and sodium hypochlorite, to the first lithium containing solution obtained in the acid solution dissolution step to oxidize manganese in the first lithium containing solution and obtain insoluble manganese dioxide, thereby precipitating to remove the manganese dissolved in the liquid to obtain a post-oxidation liquid. While the manganese is removable also in the above-described pH adjustment step, the manganese is removed before the pH adjustment step by providing the oxidation step. Therefore, the load of removing the manganese in the pH adjustment step can be reduced. The manganese precipitated to be removed in the oxidation step is reusable. As the type of the oxidant used in the oxidation step, air, oxygen, sodium hypochlorite, or the like can be employed. The first lithium containing solution has a redox potential set to a pH and an electric potential in a region of manganese dioxide in a Pourbaix diagram. The obtained post-oxidation liquid is put to the pH adjustment step after the oxidation step.

### (Others)

### <Crystallization Step>

In all of the embodiments, there may be a case where a crystallization step of solidifying lithium hydroxide dissolved in the lithium hydroxide containing solution is provided after the conversion step. The crystallization step is indicated by the dotted line in Fig. 1.

When the lithium hydroxide containing solution obtained in the conversion step is evaporated to dryness, lithium hydroxide is obtained. However, this lithium hydroxide containing solution contains alkali metals, such as sodium or potassium, and the direct evaporation to dryness causes a solid material obtained from it to contain much hydroxides other than lithium hydroxide. In view of this, the crystallization step of solidifying lithium hydroxide dissolved in the lithium hydroxide containing solution is preferably provided after the conversion step.

In the crystallization step, by solidifying the lithium hydroxide dissolved in the lithium hydroxide containing solution, a solid lithium hydroxide is obtained. A crystallization mother liquor is obtained together with the solid lithium hydroxide. In the conversion step, lithium becomes a lithium hydroxide, and the alkali metals, such as sodium and potassium, become hydroxides. Accordingly, they are also contained in the lithium hydroxide containing solution obtained in the conversion step. Furthermore, chlorine ions as anions also pass through the membrane to be contained in the lithium hydroxide containing solution. In the crystallization step, the difference in solubility between the respective hydroxides is used to solidify the lithium hydroxide and separate contained impurities.

In the crystallization step, the lithium hydroxide containing solution is heated to be concentrated. In this respect, the concentration of metal ions contained in the liquid increases, and lithium hydroxide having a relatively low solubility is deposited and solidified first. The deposited lithium hydroxide is recovered as the solid lithium hydroxide. In this respect, sodium hydroxide or potassium hydroxide having relatively high solubility is not deposited and remains in the aqueous solution. Therefore, the purity of the recovered lithium hydroxide increases.

For example, at 60°C, the solubility of lithium hydroxide is 13.2 g/100 g-water, and it is seen that the solubility of lithium hydroxide is significantly low compared with 174 g/100 g-water of sodium hydroxide and 154 g/100 g-water of potassium hydroxide. Since the chlorine ion is 2 g/L also during the operation of heating to concentrate, the chlorine ion is not deposited as chloride of the alkali metal in the lithium hydroxide.

This step can be industrially performed with a continuous crystallization using a crystallization can. It can be performed also with a batch crystallization. The crystallization mother liquor generated in the crystallization step is a concentrated alkaline aqueous solution. Since the crystallization mother liquor contains lithium hydroxide by an amount of the solubility, repeating the lithium adsorption step increases a lithium recovery rate. In addition, the neutralizer cost decreases.

### [Examples]

The following will describe the specific examples of the method for producing lithium hydroxide according to the present invention. However, the present invention is not limited to the examples.

### (Example 1)

### <Hydrocarbonating Step>

78 g of rough lithium carbonate and 1.56 L of pure water in Table 1 were put into a plastic beaker of 2 L, and were stirred to be mixed to obtain a slurry. Carbon dioxide was blown to the slurry for three hours, and the unreacted and insoluble carbon dioxide started to come out in a form of air bubbles. With this blowing of carbon dioxide, the lithium carbonate was converted into lithium hydrogen carbonate and was dissolved. This hydrocarbonating step was performed at 30°C. In the hydrocarbonating step, after the blowing of carbon dioxide, the slurry was suctioned and the residue was removed, and the lithium hydrogen carbonate solution in Table 2 was obtained.

**[Table 1]**

| Contained metal | Al | B | Ca | K | Li | Mg | Mn | Na | Cl |
|---|---|---|---|---|---|---|---|---|---|
| | ppm | ppm | ppm | ppm | % | ppm | ppm | ppm | ppm |
| | <10 | <10 | 17000 | 100 | 17 | 390 | <10 | 23000 | 15000 |

**[Table 2]**

| Contained metal | Al | B | Ca | K | Li | Mg | Mn | Na |
|---|---|---|---|---|---|---|---|---|
| | g/L | g/L | g/L | g/L | g/L | g/L | g/L | g/L |
| | <0.001 | <0.001 | 0.005 | 0.006 | 7.400 | 0.009 | <0.001 | 1.200 |

### <Decarbonation Step>

1.56 L of the lithium hydrogen carbonate solution obtained in the hydrocarbonating step was put into a stainless-steel beaker of 2 L, was, while being heated to 80°C, stirred to be mixed for approximately 3 hours. In view of this, the lithium hydrogen carbonate was converted into lithium carbonate and precipitated. The obtained purified lithium carbonate was cleaned by repulping and watering with pure water, and dried by heating. After drying by heating, 46 g of the purified lithium carbonate was obtained. Analysis values thereof are shown in Table 3.

**[Table 3]**

| Contained metal | Al | B | Ca | K | Li | Mg | Mn | Na | Cl |
|---|---|---|---|---|---|---|---|---|---|
| | ppm | ppm | ppm | ppm | % | ppm | ppm | ppm | ppm |
| | <10 | <10 | 120 | <20 | 19 | 58 | <10 | 80 | <50 |

By comparing Table 1 and Table 3, it was found that the decarbonation step could reduce the impurities. That is, it was found that impurity concentrations of sodium, calcium, and magnesium were reduced.

### <Acid Solution Dissolution Step>

70 g of purified lithium carbonate obtained in the decarbonation step and 400 ml of pure water were put into a plastic beaker of 1 L, and were stirred to be mixed to obtain a slurry. 165 ml of 37% HCl was added to the slurry, and pure water was added so as to obtain 700 ml of the first lithium containing solution.

### <pH Adjustment Step (Impurity Removal Step)>

The purified lithium carbonate obtained in the above-described decarbonation step was added to the first lithium containing solution obtained in the acid solution dissolution step, and a pH was adjusted to remove impurities in the ion exchange step. In this embodiment, the stirring and mixing was performed to obtain pH of 8.4, and a post-pH adjustment liquid was obtained. This step was all performed at ordinary temperature. Contained metals as the impurities are shown in Table 4. It is seen that the content of sodium is significantly reduced by undergoing the decarbonation step, the acid solution dissolution step, and the pH adjustment step.

**[Table 4]**

| Contained metal | Al | B | Ca | K | Li | Mg | Mn | Na |
|---|---|---|---|---|---|---|---|---|
| | g/L | g/L | g/L | g/L | g/L | g/L | g/L | g/L |
| | <0.001 | <0.001 | 0.004 | 0.003 | 21.400 | 0.002 | <0.001 | 0.009 |

### <Ion Exchange Step (Impurity Removal Step)>

20 ml of chelating resin (Amberlite: IRC748 manufactured by Du Pont) was filled in a glass column, and was conditioned to make it a functional group Li type. Afterwards, just 600 mL (BV30) of the post-pH adjustment liquid obtained in the pH adjustment step was passed through the column at a liquid passing rate of 1.67 ml/min (SV5). Table 5 shows a metal concentration of the second lithium containing solution after flowing out of the column. It is seen that this ion exchange step could reduce calcium and magnesium to an extremely small amount.

**[Table 5]**

| Contained metal | At | B | Ca | K | Li | Mg | Mn | Na |
|---|---|---|---|---|---|---|---|---|
| | g/L | g/L | g/L | g/L | g/L | g/L | g/L | g/L |
| | <0.001 | <0.001 | <0.00005 | 0.004 | 19.000 | <0.00005 | <0.001 | 0.008 |

### <Conversion Step>

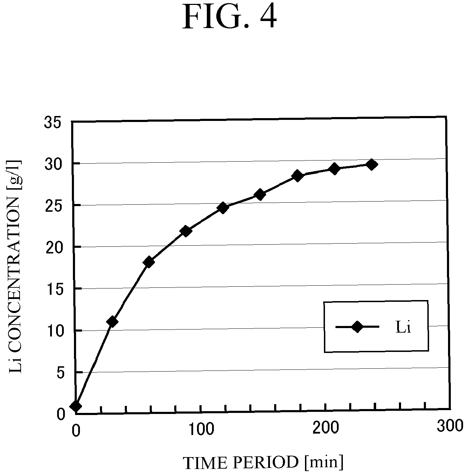

1 L of the second lithium containing solution obtained in the impurity removal step was introduced to a bipolar membrane electrodialysis unit (manufactured by ASTOM Corporation: ACILYZER EX3B), and lithium chloride was converted into lithium hydroxide. A liquid amount of the lithium hydroxide containing solution after the conversion was 0.6 L. Fig. 4 illustrates a relation between an energizing time and a lithium concentration in the lithium hydroxide containing solution. The lithium concentration in the lithium hydroxide containing solution increased along with the energization, and was concentrated to 28 g/L to 29 g/L in the end. Table 6 shows a metal concentration after the electrodialysis. As can be seen in the table, it is seen that a high purity lithium hydroxide containing solution with a very low impurity concentration was obtained.

**[Table 6]**

| Contained metal | Al | B | Ca | K | Li | Mg | Mn | Na | Cl |
|---|---|---|---|---|---|---|---|---|---|
| | g/L | g/L | g/L | g/L | g/L | g/L | g/L | g/L | g/L |
| | <0.001 | <0.001 | <0.001 | 0.008 | 27.000 | <0.001 | <0.001 | 0.039 | 2.100 |

### <Crystallization Step>

0.6 L of the lithium hydroxide containing solution obtained in the conversion step was put into a stainless-steel beaker, was heated while being stirred and kept at a temperature of 90°C to 100°C, was concentrated to 0.2 L, and a deposited lithium hydroxide crystal was recovered. Table 7 shows analysis values of this lithium hydroxide crystal. It is seen that the lithium hydroxide crystal with a low impurity concentration could be recovered.

**[Table 7]**

| Contained metal | Al | B | Ca | K | Li | Mg | Mn | Na | Cl |
|---|---|---|---|---|---|---|---|---|---|
| | ppm | ppm | ppm | ppm | % | ppm | ppm | ppm | ppm |
| | <10 | <10 | <10 | <20 | 19 | <10 | <10 | <10 | <50 |

### (Comparative Example 1)

The difference between Comparative Example 1 and Example 1 is that the decarbonation step was not performed in the steps of Example 1. Other than this, Comparative Example 1 was all performed under the same conditions. That is, the lithium hydrogen carbonate solution obtained in the hydrocarbonating step was directly added with hydrochloric acid to perform the acid solution dissolution step, and thereafter, a lithium hydroxide containing solution was obtained through the impurity removal step and the conversion step. The result is shown in Table 8. Compared with Table 6, it is seen that a significantly high concentration of sodium is contained.

**[Table 8]**

| Contained metal | Al | B | Ca | K | Li | Mg | Mn | Na |
|---|---|---|---|---|---|---|---|---|
| | g/L | g/L | g/L | g/L | g/L | g/L | g/L | g/L |
| | <0.001 | <0.001 | 0.001 | 0.090 | 27.000 | <0.001 | <0.001 | 3.400 |

## Claims

1. A method for producing lithium hydroxide comprising steps (1) to (5) below:
(1) a hydrocarbonating step of blowing carbon dioxide to a slurry of a mixture of water and rough lithium carbonate to obtain a lithium hydrogen carbonate solution;
(2) a decarbonation step of heating the lithium hydrogen carbonate solution to obtain a purified lithium carbonate;
(3) an acid solution dissolution step of dissolving the purified lithium carbonate in an acid solution to obtain a first lithium containing solution;
(4) an impurity removal step of removing a part of metal ions from the first lithium containing solution to obtain a second lithium containing solution; and
(5) a conversion step of converting lithium salt contained in the second lithium containing solution into lithium hydroxide by electrodialysis to obtain a lithium hydroxide containing solution in which the lithium hydroxide is dissolved.

2. The method for producing lithium hydroxide according to claim 1, comprising
a crystallization step of solidifying the lithium hydroxide dissolved in the lithium hydroxide containing solution after the conversion step.

3. The method for producing lithium hydroxide according to claim 1 or 2, wherein
the impurity removal step includes:
a pH adjustment step of adjusting a pH by adding alkali to the first lithium containing solution to obtain a post-pH adjustment liquid; and
an ion exchange step of bringing the post-pH adjustment liquid into contact with ion-exchange resin to obtain the second lithium containing solution.

4. The method for producing lithium hydroxide according to claim 1 or 2, wherein
the impurity removal step includes:
a step of adding an oxidant to the first lithium containing solution to obtain a post-oxidation liquid;
a pH adjustment step of adjusting a pH by adding alkali into the post-oxidation liquid to obtain a post-pH adjustment liquid; and
an ion exchange step of bringing the post-pH adjustment liquid into contact with ion-exchange resin to obtain the second lithium containing solution.

5. The method for producing lithium hydroxide according to claim 3 or 4, wherein
the pH of the post-pH adjustment liquid after the pH adjustment step is 6 or more and 10 or less.

6. The method for producing lithium hydroxide according to any one of claims 3 to 5, wherein
the alkali includes lithium carbonate or lithium hydroxide.

7. The method for producing lithium hydroxide according to claim 6, wherein
the lithium carbonate is the purified lithium carbonate obtained in the decarbonation step.

8. The method for producing lithium hydroxide according to any one of claims 1 to 7, wherein
in the decarbonation step, the lithium hydrogen carbonate solution is heated at 60°C or more and 90°C or less.
